Europäisches Patentamt

European Patent Office

Office européen des brevets

(11) Publication number: **0 413 554 A1**

## EUROPEAN PATENT APPLICATION

(21) Application number: 90308918.3

(51) Int. Cl.5: **B29C 47/36**, B29C 47/52

(22) Date of filing: 14.08.90

(30) Priority: 17.08.89 GB 8918780

(43) Date of publication of application:
20.02.91 Bulletin 91/08

(84) Designated Contracting States:
DE FR GB IT

(71) Applicant: FRANCIS SHAW & COMPANY
(MANCHESTER) LIMITED
P.O. Box 12 Corbett Street
Manchester, M11 4BB(GB)

(72) Inventor: Brown, Christopher John
34 Hathersage Drive, Shirebrook Park
Glossop, Derbyshire, SK13 8RG(GB)

(74) Representative: Downey, William Gerrard et al
WILSON GUNN & ELLIS 41-51 Royal
Exchange Cross Street
Manchester M2 7BD(GB)

(54) Processing apparatus.

(57) Processing apparatus such as an extruder comprises a segmented barrel (1) bearing formations on its internal surface and housing a relatively smooth surfaced shaft (3). The segments (7,8,9) may be driven relative to each other and/or relative to the shaft (3). The arrangement enables the provision of feed and discharge geometries which do not interfere with the apparatus drive train and other moving parts, and also the achievement of a pumping action within those geometries.

FIG.1

EP 0 413 554 A1

## PROCESSING APPARATUS

The present invention relates to processing apparatus.

The apparatus may be an extruder, or designed for attachment to other processing machinery such as a cavity transfer mixer.

According to the present invention, there is provided processing apparatus comprising a barrel, a shaft disposed within the barrel and means for driving material through the barrel to process it in which formations for acting upon the material are on the internal wall of the barrel.

The means for driving the material through the barrel may comprise a drive for rotating the barrel with reference to the shaft or rotating the shaft relative to the barrel or a pump for pumping material through the apparatus. The shaft has, advantageously, a relatively smooth external surface. The barrel may be divided into segments thus facilitating replacement of formations on the internal surface of the barrel. These segments can be provided with their own individual drives thus enabling different segments to be driven at different relative rates. The apparatus may be used as the feed and/or discharge configuration for rotating polymer processing machinery. In feeding, a piped flow of material fluid polymer is converted into a circumferentially distributed axial flow. In discharge a circumferentially distributed axial flow of fluid polymer may be converted into a piped flow. Piped flows may be tangential or axial to the axis of the machinery.

In order that the invention may be more clearly understood, one embodiment thereof will now be described, by way of example, with reference to the accompanying drawings, in which:-

Figure 1 is a diagrammatic side elevational view in partial section of one form of extruder according to the invention,

Figure 2 is a diagrammatic side elevational view in partial section of another form of extruder according to the invention,

Figure 3 is a cross sectional view taken through the extruder of Figure 1 or 2 at a feed or discharge point,

Figure 4 is a side elevational view at the feed or discharge point of Figure 3, and

Figure 5 is a view taken along the line V-V of Figure 3.

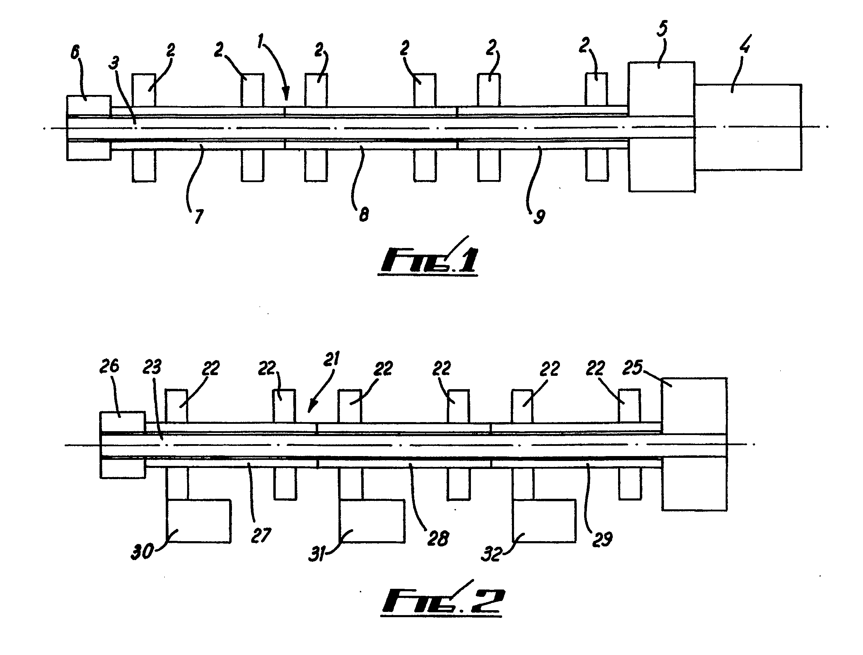

Referring to Figure 1, the extruder comprises an elongate, substantially cylindrical, hollow barrel 1 mounted on a plurality of fixed barrel mountings 2. Coaxially disposed within the barrel is shaft 3. This shaft is mounted for rotation within the barrel by means of a drive 4. The shaft is mounted at one end in a feed section 5 and at the other end in a shaft mounting 6. The geometrical, usually helical, formations within the extruder which act on material passing through the extruder during processing are formed on the internal wall of the barrel 1. The shaft 3 has a relatively smooth internal surface. The barrel is divided along its length into component sections 7,8 and 9. This enables sections of the barrel 1 to be replaced or inserts to be introduced into the material flow path at a variety of points. The ready replacement of barrel segments in turn allows the helix geometry of the internal surface of the barrel to be easily changed by removing and replacing relevant segments. Although three segments are shown, the number may be varied as desired.

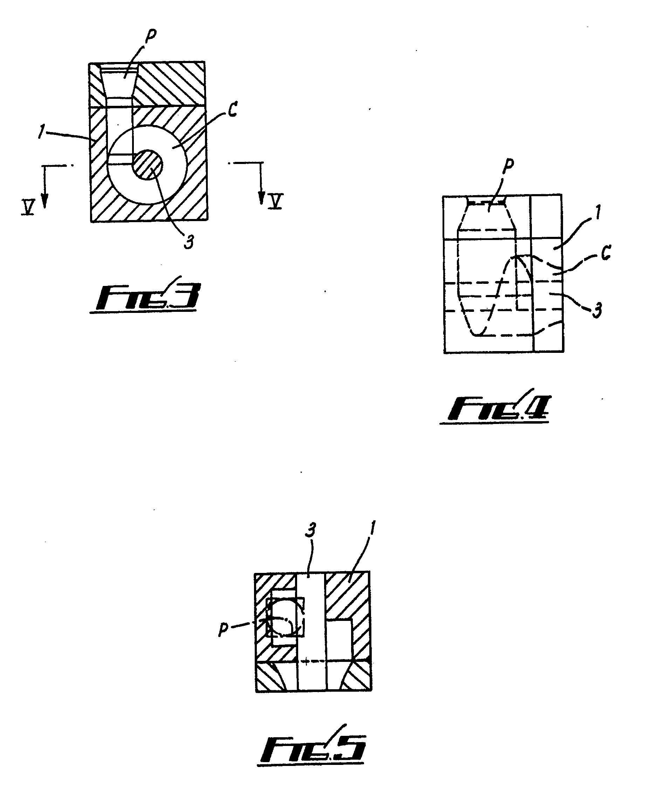

The embodiment shown in Figure 2 is similar to that shown in Figure 1. Equivalent parts bear the same references preceded by the figure reference numeral 2. In the embodiment of Figure 2, the barrel is mounted for rotation on a plurality of rotatable barrel mountings 22 and the shaft 23 is fixed on a shaft mounting 26 at one end and a shaft mounting in the feed section 25 at the other end. The three segments 27, 28 and 29 of the rotatable barrel 21 are provided with their own individual drives 30, 31 and 32. Thus in addition to the ready replaceability of the segments, the segments may also be driven at different rates. In other respects the figure 2 embodiment is the same as that of Figure 1 and in particular the helix geometry is formed on the internal wall of the barrel and the external surface of the shaft is relatively smooth.

Referring to Figures 3, 4 and 5, the above described helix geometry may be used as the feed and/or discharge configuration for rotating polymer processing machinery, such as a cavity transfer mixer. In feeding, the geometry will serve to convert a piped flow of fluid polymer into a circumferentially distributed axial flow. In discharge the geometry will serve to convert a circumferentially distributed axial flow of fluid polymer into a piped flow. The direction of the piped flow may be either tangential or axial to the axis of the polymer processing machine. With the barrel held stationary while the shaft is rotated, a positive pumping action will result. With both barrel and shaft held stationary, reliance must be placed on an external pumping means in order to propel fluid through the system.

Piped flows are referenced P and circumferentially distributed flows are referenced C.

This arrangement enables the provision of feed and discharge geometries that do not interfere with the machinery drive train and other moving parts, and also the achievment of a pumping action within the feed or discharge section.

It will be appreciated that the above embodiment has been described by way of example only and that many variations are possible without departing from the invention.

## Claims

1. Processing apparatus comprising a barrel, a shaft disposed within the barrel and means for driving material through the barrel to process it in which formations for acting upon the material are on the internal wall of the barrel.

2. Processing apparatus as claimed in claim 1, in which the means for driving material comprises a drive for rotating the barrel relative to the shaft.

3. Processing apparatus as claimed in claim 1, in which the means for driving material comprises a drive for rotating the shaft relative to the barrel.

4. Processing apparatus as claimed in claim 1, in which the means for driving material comprises a pump for pumping material through the apparatus.

5. Processing apparatus as claimed in any preceding claim, in which the shaft has a relatively smooth external surface.

6. Processing apparatus as claimed in any preceding claim, in which the barrel is divided into segments to facilitate replacement of formations on its internal surface.

7. Processing apparatus as claimed in claim 6, in which two or more segments have their own individual drives to enable those segments to be driven at different rates.

8. Processing apparatus as claimed in any preceding claim forming the or part of the feed configuration for rotating polymer machinery whereby a piped flow of material fluid polymer is converted into a circumferentially distributed axial flow.

9. Processing apparatus as claimed in any preceding claim forming the or part of the discharge configuration for rotating polymer machinery whereby a circumferentially distributed axial flow of material fluid polymer is converted into a piped flow.

Fig.1

Fig.2

FIG. 3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 416 105 (SUSSEX PLASTICS ENGINEERING, INC.) <br> * Claims; figures * | 1-5,8,9 | B 29 C 47/36 <br> B 29 C 47/52 |
| Y | | 6,7 | |
| Y | GB-A-2 216 844 (REIFENHAUSER GmbH & CO. MASCHINENFABRIK) <br> * Figures 4-6 * | 6,7 | |
| X | DE-A-2 118 273 (PAUL TROESTER MASCHINENFABRIK) <br> * Claims; page 5, lines 24-28; figure * | 1,2,4-7 | |
| X | FR-A-2 128 417 (H. COLLIN) <br> * Figures * | 1,3,5 | |
| A | FR-A-2 218 183 (FRIED. KRUPP GmbH) <br> * Figures * | 1-5,8,9 | |
| A | DE-A-3 327 137 (KONISHIROKU PHOTO IND. CO., LTD) <br> * Figures 3,4 * | 1,3-9 | |
| A | GB-A-3 315 8 (HERMANN BERSTORFF MASCHINENBAU GmbH) <br> * Figure * | 1-5 | TECHNICAL FIELDS SEARCHED (Int. Cl.5) <br><br> B 29 C |
| A | GB-A-2 096 533 (NATIONAL RESEARCH DEVELOPMENT CORP.) <br> * Figures * | 1-5,8 | |
| A | DE-A-2 311 947 (SIEMENS AG) <br> * Figure * | 1-4 | |

−/−

The present search report has been drawn up for all claims

| Place of search | Date of completion of search | Examiner |
|---|---|---|
| The Hague | 22 November 90 | BELIBEL C. |

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 242 708 (BARMAG BARMER MASCHINENFABRIK AG) <br> * Figures * | 1,3,4,6 | |
| A | FR-A-2 179 857 (USM CORP.) <br> * Figures 2,3 * | 1,3,5,8,9 | |

TECHNICAL FIELDS SEARCHED (Int. Cl.5)

The present search report has been drawn up for all claims

| Place of search | Date of completion of search | Examiner |
|---|---|---|
| The Hague | 22 November 90 | BELIBEL C. |